# EUROPÄISCHE PATENTANMELDUNG

(11) **EP 0 671 439 A1**
(43) Veröffentlichungstag der Anmeldung: **13.09.1995**
(21) Anmeldenummer: 95102944.6
(22) Anmeldetag: 02.03.1995
(51) Int. Cl.: C08L 97/02

(54) **Formkörper aus lignocellulosehaltigen Materialien und Kunststoffmahlgut**

(30) Priorität: 10.03.1994 DE 4408017
(71) Anmelder: BASF AKTIENGESELLSCHAFT, D-67056 Ludwigshafen (DE)
(72) Erfinder: Baierweck, Petra, Dr., D-67459 Böhl-Iggelheim (DE); Hildenbrand, Peter, Dr., D-76199 Karlsruhe (DE); Siegler, Manfred, D-67227 Frankenthal (DE); Fritzsche, Thomas, D-67069 Ludwigshafen (DE)

(57) **Zusammenfassung**

Formkörper aus lignocellulosehaltigen Materialien erhältlich durch Härtung einer Mischung aus
A) einem wäßrigen Kondensationsharz und
B) einer Mischung aus
   B₁) 70 bis 98 Gew.-% von Partikeln eines lignocellulosehaltigen Materials und
   B₂) 2 bis 30 Gew.-% eines feinteiligen Kunststoffs.

## Beschreibung

Die vorliegende Erfindung betrifft Formkörper aus lignocellulosehaltigen Materialien, erhältlich durch Härtung einer Mischung aus
A) einem wäßrigen Kondensationsharz und
B) einer Mischung aus
   B₁) 70 bis 98 Gew.-% von Partikeln eines lignocellulosehaltigen Materials und
   B₂) 2 bis 30 Gew.-% eines feinteiligen Kunststoffs.

Die Herstellung von Formkörpern aus lignocellulosehaltigen Materialien wie Spanplatten unter Verwendung von Aminoharzen wie Harnstoff-, Melamin- oder Phenol-Formaldehydharzen als Bindemittel ist allgemein bekannt. Dabei werden die Teilchen aus lignocellulosehaltigen Materialien, beispielsweise Holzspäne, mit dem Bindemittel vermischt und bei erhöhten Temperaturen und unter Druck verpreßt. Der Anteil an lignocellulosehaltigem Material in einem solchen Formkörper liegt üblicherweise im Bereich von 85 bis 95 Gew.-%.

Weiterhin ist aus der DE-OS 2 206 829 ein Verfahren zur Herstellung von Formkörpern bekannt, bei dem die üblichen Kondensationsharz-Bindemittel durch Abfälle aus thermoplastischen Kunststoffen ganz oder teilweise ersetzt werden.

Die in immer größeren Mengen anfallenden Kunststoffabfälle stellen ein großes Problem dar. Deshalb wird allgemein nach Möglichkeiten gesucht, Kunststoffabfälle wiederzuverwerten.

Demgemäß wurden die eingangs definierten Formkörper gefunden, bei denen ein Teil des lignocellulosehaltigen Substrats durch feinteiligen Kunststoff ersetzt wird.

Zu den erfindungsgemäßen Formkörpern ist im einzelen folgendes auszuführen:
Als Bindemittel (Komponente A) können übliche Kondensationsharze eingesetzt werden, die durch Kondensation von Formaldehyd mit Harnstoff und/oder Melamin und gewünschtenfalls weiteren aminoplstibildenden Komponenten wie Guanaminen, Benzoguanaminen oder modifizierten Harnstoffen wie beispielsweise Ethylenharnstoff oder Propylenharnstoff erhalten werden. Weiterhin können auch Phenol-Formaldehyd-Kondensationsharze eingesetzt werden.

Die Herstellung und Zusammensetzung solcher Kondensationsharze ist allgemein bekannt.

Es werden vorzugsweise Harnstoff-Formaldehyd-Harze verwendet. Sie weisen im allgemeinen ein Molverhältnis von Harnstoff zu Formaldehyd von 1 : 1,1 bis 1,6, vorzugsweise von 1 : 1,1 bis 1,5 auf. Die Harnstoff-Formaldehyd-Harze können auch partiell mit C₁-C₄-Alkanolen wie Methanol, Ethanol oder Butanol verethert sein oder mit C₂-C₄-Diolen wie Diethylenglykol, Propylenglykol oder Butylenglykol verethert sein.

Üblicherweise werden Harnstoff-Formaldehyd-Harze mit Feststoffgehalten im Bereich von 60 bis 75 Gew.-% bei Viskositäten im Bereich von 200 bis 1.600 mPa·s (20°C) verwendet.

Bevorzugt werden Polyamid-Abfälle verwendet. In Betracht kommen dabei vor allem Polyamide mit Schmelztemperaturen im Bereich von 180 bis 330°C, vorzugsweise von 200 bis 280°C. Dabei kann sowohl Polyamid-Mahlgut mit Teilchengrößen im Bereich von 1 bis 10 mm, vorzugsweise von 4 bis 8 mm, als auch Polyamid-Staub mit Teilchengrößen unter 1 mm eingesetzt werden.

Solche Polyamid-Stäube fallen im Rahmen des Polyamid-Recyclings vor allem bei der Metallabtrennung vom Mahlgut an. Bei dieser Metallabtrennung wird üblicherweise in einem Luftherd im Luftstrom von unten durch das Mahlgut geleitet, wobei sowohl das Metall als auch die leichtere Staubfraktion abgetrennt werden. Der erfindungsgemäße Einsatz von Polyamid-Stäuben ist insofern vorteilhaft, als bisher die Wiederverwendungsmöglichkeiten für solche Stäube begrenzt sind.

Die feinteiligen Polyamid-Abfälle können auch im Gemisch mit anderen feinteiligen Kunststoffen eingesetzt werden, beispielsweise im Gemisch mit Polyolefinen, Polyphenylenethern und deren Blends oder mit Polyestern.

Die Herstellung der Formkörper erfolgt in an sich üblicher Weise durch Vermischen des Substrates aus lignocellulosehaltigen Materialien und Kunststoffpartikeln mit dem Kondensationsharz-Bindemittel. Das Mengenverhältnis von Bindemittel zu der Mischung aus lignocellulosehaltigem Material und Kunststoffpartikeln wird üblicherweise so gewählt, daß 5 bis 20 Gew.-Teile des wäßrigen Bindemittels (Komponente A) auf 80 bis 95 Gew.-Teile der Substrat-Mischung (Komponente B) eingesetzt werden.

Die Vermischung der Komponenten kann in üblicher Weise erfolgen, indem beispielsweise die Substrat-Mischung B) mit dem Bindemittel besprüht wird.

Weiterhin können bei der Herstellung der Formkörper wie vor allem Spanplatten die hierfür üblichen Hilfsmittel eingesetzt werden, wie beispielsweise wäßrige Paraffin-Dispersionen oder Härter. Als Härter kommen dabei die üblichen Härter wie Ammoniumchlorid, Ammoniumsulfat, Ammoniumnitrat, Ammoniumphosphate, Ameisensäure, Schwefelsäure oder Salzsäure in Betracht, welche üblicherweise vor dem Besprühen des Substrats mit dem wäßrigen Harz-Bindemittel vermischt werden.

Die Bindemittel/Substrat-Gemische können dann in bekannter Weise bei Temperaturen im Bereich von 120 bis 250°C unter Druck verpreßt werden.

Die erfindungsgemäßen Formkörper weisen mindestens ebenso gute mechanische Eigenschaften und Wasserbeständigkeit auf wie herkömmliche Spanplatten, bieten dabei jedoch den Vorteil der Wiederverwendung von Kunststoffabfällen. Bei höheren Kunststoffanteilen in der Substrat-Mischung kann sogar eine Verbesserung der Wasserbeständigkeit erzielt werden.

### Beispiele 1 bis 5

### Herstellung von Spanplatten

Es wurden Dreischichtplatten hergestellt, wobei in der Mittelschicht Polyamid-Mahlgut eingesetzt wurde.

Als Bindemittel für Mittelschicht (MS) und Deckschichten (DS) wurden Leimflotten folgender Zusammensetzung verwendet:

| Ansatz für | MS | DS |
|---|---|---|
| UF-Leim ¹⁾ | 692 g | 931 g |
| Paraffin-Dispersion ²⁾ | 50 g | 55 g |
| wässr. Ammoniumchlorid-Lsg., 20 Gew.-% | 69 g | 19 g |
| Wasser | 38 g | 95 g |

| | | |
|---|---|---|
| ¹⁾ handelsüblicher Harnstoff-Formaldehyd-Leim, Feststoffgehalt 66,5 Gew.-%, Viskosität 400 mPa·s (20°C), Molverhältnis Harnstoff zu Formaldehyd 1 zu 1,1 | | |
| ²⁾ 50 gew.-%ige Festwachs-Dispersion in Wasser | | |

In den Deckschichten wurden als Substrat 100 Gew.-% feine Fichtenspäne verwendet, in der Mittelschicht wurden Substrat-Mischungen aus groben Fichtenspänen und Polyamid-Mahlgut (Mengen und Korngrößen siehe Tabelle I) verwendet.

Die Leimflotten wurden in solchen Mengen auf die Materialien für Mittelschicht bzw. Deckschicht gegeben, daß die Festharzdosierung in der Mittelschicht 9 Gew.-%, bezogen auf die Mischung atro Späne/Polyamid, und in den Deckschichten 11 Gew.-%, bezogen auf atro Späne, betrug. Der Festwachsanteil betrug in beiden Schichten 0,5 Gew.-%.

Das beleimte Material wurde zu Matten geschüttet und bei 180°C und 25 bar 270 s lang zu Spanplatte verpreßt.

Die Prüfergebnisse der Spanplatte sind in Tabelle II aufgeführt.

**Tabelle I**

| | Beispiele | | | | |
|---|---|---|---|---|---|
| Mischungen MS | 1 | 2 | 3 | 4 | 5* |
| Fichtenspäne grob, Gew.-% | 95 | 90 | 90 | 80 | 100 |
| Polyamid, Ø <1 mm. Gew.-% | 5 | 10 | - | - | - |
| Polyamid, Ø <8 mm, Gew.-% | - | - | 10 | 20 | - |

| | | | | | |
|---|---|---|---|---|---|
| *Vergleichsversuch | | | | | |

**Tabelle II**

| | Beispiele | | | | |
|---|---|---|---|---|---|
| Mischungen MS | 1 | 2 | 3 | 4 | 5* |
| Plattendicke, geschliffen mm | 18,1 | 18,1 | 18,1 | 17,7 | 18,0 |
| Querzugsfestigkeit V20 nach DIN 52 365, N/mm² | 0,64 | 0,64 | 0,68 | 0,61 | 0,65 |
| Quellung nach DIN 52 364 nach 24 h, % | 17,5 | 16,5 | 16,1 | 13,5 | 17,6 |

| | | | | | |
|---|---|---|---|---|---|
| *Vergleichsversuch | | | | | |

## Patentansprüche

1. Formkörper aus lignocellulosehaltigen Materialien, erhältlich durch Härtung einer Mischung aus
A) einem wäßrigen Kondensationsharz und
B) einer Mischung aus
B₁) 70 bis 98 Gew.-% von Partikeln eines lignocellulosehaltigen Materials und
B₂) 2 bis 30 Gew.-% eines feinteiligen Kunststoffs.

2. Formkörper nach Anspruch 1, erhältlich unter Verwendung von feinteiligem Polyamid als Komponente B₂).

3. Formkörper nach Anspruch 1 und 2, erhältlich unter Verwendung einer Mischung B), enthaltend 5 bis 20 Gew.-% der Komponente B₂).

4. Formkörper nach einem der Ansprüche 1 bis 3, erhältlich unter Verwendung eines Harnstoff-Formaldehyd-Kondensationsharzes als Komponente A).

5. Formkörper nach einem der Ansprüche 1 bis 4, erhältlich durch Härtung einer Mischung aus 5 bis 20 Gew.-Teilen der Komponente A) und 80 bis 95 Gew.-Teilen der Komponente B).

6. Verfahren zur Herstellung von Formkörpern aus lignocellulosehaltigen Materialien und wäßrigen Kondensationsharzen, dadurch gekennzeichnet, daß 2 bis 30 Gew.-% der lignocellulosehaltigen Materialien durch feinteiligen Kunststoff ersetzt werden.
